# FASCICULE DE BREVET EUROPEEN

(11) **EP 1 113 222 B1**
(45) Date de publication et mention de la délivrance du brevet: **09.07.2003**
(21) Numéro de dépôt: 00403392.4
(22) Date de dépôt: 04.12.2000
(51) Int. Cl.: F23D 14/40, F23D 14/42

(54) **Chalumeau oxy-combustible à organe de commande unique des valves et du système d'allumage**
Sauerstoffbrenner mit einzelner Ventilregulierungs- und Zündungsvorrichtung
Oxygen torch with unique valve and igniter actionning device

(30) Priorité: 27.12.1999 FR 9916529
(43) Date de publication de la demande: 04.07.2001
(73) Titulaire: LA SOUDURE AUTOGENE FRANCAISE, F-75007 Paris (FR); L'air Liquide, S.A. à Directoire et Conseil de Surveillance pour l'Etude et l'Exploitation des Procédés Georges Claude, 75321 Paris Cedex 07 (FR)
(72) Inventeur: Pisot, Philippe, 95590 Presles (FR); Cannet, Gilles, 95620 Parmain (FR); Lemesle, Gervais, 95310 Saint Ouen L'Aumone (FR)
(74) Mandataire: Pittis, Olivier

(56) Documents cités:
- EP-A- 0 895 026
- DE-B- 2 326 125
- FR-A- 2 728 059
- FR-A- 2 731 266
- FR-A- 2 770 657
- US-A- 5 470 227
- US-A- 5 792 281

## Description

La présente invention a pour objet un chalumeau oxy-combustible et plus précisément un système de commande d'un tel chalumeau comprenant au moins trois ou quatre valves, et un organe de commande unique desdites valves coopérant avec celles-ci et apte à prendre une première position dans laquelle lesdites valves sont au repos et une deuxième position stable dans laquelle au moins une desdites valves est en position active.

De façon connue, les chalumeaux oxy-combustibles peuvent être classés en trois catégories selon leur utilisation.

On trouve des chalumeaux pour le coupage, encore appelés chalumeaux "coupeurs", qui utilisent, d'une part, un gaz combustible, tel que C₂H₂, et, d'autre part, de l'oxygène comme comburant. Pour ceux-ci, il est nécessaire d'alimenter la flamme de veilleuse, lorsqu'ils en comportent une, ainsi que de réaliser le mélange des gaz pour produire la flamme de chauffe et enfin d'assurer une alimentation séparée en oxygène pour obtenir le jet de découpe.

Par ailleurs, dans le cas de chalumeaux de chauffage ou de soudage, encore appelés chalumeaux "chauffeurs" ou "soudeurs", respectivement, il suffit de réaliser le mélange du combustible, par exemple de l'acétylène, et de l'oxygène pour alimenter la flamme principale et d'alimenter la flamme de veilleuse.

Toutefois, dans tous les cas, il est nécessaire de contrôler, durant les différentes étapes d'utilisation (allumage de la veilleuse, allumage de la flamme de chauffage, éventuellement production du jet de découpe, extincteur de la flamme principale), le débit de combustible et comburant afin d'obtenir les caractéristiques respectivement de chauffage, de soudage ou de découpe souhaitée et de synchroniser les phases successives d'alimentation dans les deux gaz, respectivement, carburant et comburant.

Dans les chalumeaux classiques, la commande d'ouverture et de fermeture de l'alimentation dans les deux gaz et de réglage du débit de ces deux gaz se fait par des organes différents.

Pour remédier à ces inconvénients, on a déjà proposé de regrouper les organes de commande de l'alimentation dans les deux gaz, par exemple dans le cas du chalumeau décrit dans le document FR-A- 2695458.

On a également proposé de fournir des chalumeaux comportant un dispositif unique de commande des gaz et de l'allumage. Un tel dispositif est, par exemple, décrit dans le document FR-A-2731266 ou DE-A-2326125.

D'autres chalumeaux ou systèmes de commande pour chalumeaux sont aussi décrits par les documents US-A-5,470,227, US-A-5, 792, 281, EP-A-895026 ou FR-A-2770657. Ainsi, le document US-A-5,470,227 enseigne un chalumeau comportant deux valves commandeés simultanément par un organe de commande mobile en translation et activable par un volant rotatif. L'axe de l'organe de commande est perpendiculaire à l'axe longitudinal du corps du chalumeau.

Cependant, dans le cas des chalumeaux enseignés par ces documents, si les aménagements techniques qui y sont décrits peuvent parfois conduire à améliorer l'efficacité ou le fonctionnement du chalumeau considéré , ils présentent certains inconvénients, en particulier, pour certains d'entre eux, celui de favoriser les fausses manoeuvres ou les déclenchements intempestifs.

En effet, il peut arriver que le chalumeau chute sur son bouton de commande ou encore que, sur un chantier par exemple, les tuyaux d'alimentation du chalumeau soient accrochés par un engin et que le chalumeau, ainsi entraîné sur le sol, butte contre un obstacle provoquant son allumage inopiné ou une ouverture intempestive des gaz.

Il peut également arriver qu'une personne non avertie essaie d'éteindre un chalumeau allumé et qu'elle le ferme incorrectement, laissant fuir du gaz ou provoquant une rentrée de flammes.

En outre, il est aussi nécessaire de pouvoir régler avec précision le débit de gaz combustible et le débit de gaz comburant délivrés par le chalumeau.

De plus, il est aussi intéressant de pouvoir effectuer tous ou partie de ces réglages lors d'une phase initiale et de conserver ensuite ces réglages pour les utilisations ultérieures, c'est-à-dire après de nombreuses extinctions du chalumeau. En effet, une telle possibilité de maintien des conditions de réglage permet de faciliter le premier allumage et évite des phénomènes de claquement, l'émission de fumée au moment de l'allumage et/ou le soufflage de la flamme.

Partant de là, un but de la présente invention est alors de fournir un chalumeau oxy-combustible qui simplifie et sécurise la commande de l'alimentation en gaz du chalumeau et qui permette une mémorisation des caractéristiques de réglage de débit pour le gaz comburant, tel l'oxygène, et pour le gaz combustible, tel l'acétylène.

La solution de l'invention est alors un chalumeau, en particulier de type oxy-combustible, comprenant :
- un corps comportant une pluralité de conduites de gaz pour acheminer au moins deux flux de gaz entre une pluralité d'entrées et une pluralité de sorties ;
- au moins deux valves montées dans ledit corps et aptes à prendre une position de repos dans laquelle le flux correspondant de gaz est interrompu dans au moins l'une desdites conduites de gaz et une position active dans laquelle le passage du flux de gaz est autorisé dans au moins l'une desdites conduites de gaz ;
- un organe de commande unique d'au moins lesdites deux valves monté mobile sur ledit corps et déplaçable selon une trajectoire pour coopérer avec au moins lesdites valves, ledit organe de commande étant apte à prendre une première position stable dans laquelle lesdites deux valves sont au repos et au moins une deuxième position stable dans laquelle au moins une desdites valves est en position active ;
- au moins un moyen de réglage de débit commandable monté sur ledit corps pour régler le débit d'au moins un desdits flux de gaz, ledit moyen de réglage comportant un élément mobile de commande, caractérisé en ce que
- ledit organe de commande desdites valves est mobile en translation selon la direction d'un axe longitudinal dudit corps, et
- il comporte un système d'allumage dont l'activation est commandée par l'organe de commande.

Selon le cas, le chalumeau de l'invention peut comprendre l'une ou plusieurs des caractéristiques suivantes :
- il comporte un système d'allumage de type piézo-électrique.
- il comprend deux moyens de réglage de débit, chaque moyen de réglage étant associé à un gaz, en particulier à de l'oxygène, d'une part, et à un gaz combustible, tel l'acétylène, d'autre part.
- il comporte des moyens commandables de verrouillage dudit organe de commande pour solidariser, au repos, ledit organe de commande sur ledit corps, au moins dans ladite première position et actionnable manuellement pour désolidariser ledit organe de commande dudit corps.
- l'élément mobile de commande est un volant rotatif, de préférence un volant rotatif dont la position est représentative du débit de gaz réglé.
- chaque moyen de réglage comprend un robinet comportant un corps de robinet, un pointeau mobile et un siège, et un volant étant monté rotatif sur ledit corps de robinet pour provoquer le déplacement dudit pointeau.
- le pointeau comporte à son extrémité active une portion axiale de réglage de débit et une surface annulaire d'étanchéité, ledit siège comportant un passage axial muni d'une zone à profil progressif apte à coopérer avec la portion de réglage du pointeau pour régler le débit de gaz et une nervure annulaire d'étanchéité entourant ledit passage axial et apte à coopérer avec ladite surface d'étanchéité lorsque ledit pointeau est amené dans sa position de fermeture.
- chaque valve comprend un siège et un obturateur mobile muni d'une tige de commande présentant une extrémité de commande et ledit organe de commande comprend un curseur extérieur au corps dudit chalumeau et une came solidaire dudit curseur, ladite came étant apte à coopérer ou non avec l'extrémité de commande des tiges de commande desdites valves selon la position dudit curseur.
- ledit moyen de verrouillage comprend un poussoir monté mobile par rapport audit curseur apte à prendre une position de repos dans laquelle ledit curseur est solidaire du corps du chalumeau et une position active dans laquelle ledit curseur est libre par rapport audit corps.
- il comprend au moins trois valves, de préférence au moins quatre valves.
- il comprend une première valve de commande du gaz combustible pour délivrer une flamme de veilleuse ; une deuxième et une troisième valves pour commander, respectivement, le gaz combustible de flamme principale et pour commander l'oxygène de flamme principale, la deuxième valve alimentant aussi en dérivation le système d'allumage de la flamm de veilleuse ; et une quatrième valve de commande de l'oxygène pour le jet de coupe. Lesdites première, deuxième et troisième valves sont des valves par tout ou rien et ladite quatrième valve est à réglage progressif. Cette version de chalumeau est recommandée pour réaliser la découpe d'une pièce dans lequel l'un des gaz est de l'oxygène et l'autre gaz un combustible, ledit chalumeau délivrant une flamme de veilleuse, une flamme principale de chauffe et un jet de coupe.
- il comprend des moyens pour définir une deuxième position stable dudit organe de commande dans laquelle lesdites première et quatrième valves sont en position de repos et les deuxième et troisième valves sont en position active, de préférence il comprend, en outre, des moyens pour définir une troisième position stable dans laquelle lesdites deuxième, troisième et quatrième valves sont en position active et la première valve est en position de repos. Ladite troisième position stable du curseur correspond à la deuxième extrémité de sa trajectoire et ledit moyen de verrouillage prend sa position de repos lorsque ledit curseur est dans sa première position stable à une première extrémité de sa trajectoire et lorsque ledit curseur est dans sa troisième position stable, correspondant à la deuxième extrémité de sa trajectoire.
- en variante, il comprend une première valve de commande du combustible pour la veilleuse ; une deuxième valve de commande du combustible pour la flamme de chauffe; une troisième valve de commande d'un système d'allumage de la flamme de veilleuse ; et une quatrième valve de commande de l'oxygène pour la flamme de chauffe, de préférence lesdites valves sont à commande par tout ou rien. Cette version du chalumeau est préférée pour réaliser le chauffage d'une pièce dans lequel l'un des gaz est de l'oxygène et l'autre gaz est un combustible, ledit chalumeau délivrant une flamme de veilleuse et une flamme principale de chauffe, ladite flamme de veilleuse étant provoquée par commande du système d'allumage. Il comprend des moyens pour définir ladite deuxième position stable de l'organe de commande et, dans cette position, lesdites deuxième et quatrième valves sont en position active et lesdites première et troisième valves sont au repos.
- selon une autre variante, il comprend une première valve d'alimentation en oxygène de la flamme principale ; une deuxième valve d'alimentation en combustible de la flamme principale ; et une troisième valve d'alimentation en combustible de la veilleuse ; de préférence lesdites trois valves sont à commande par tout ou rien. Cette version est préférée lorsqu'il s'agit de réaliser le soudage de deux pièces dans lequel l'un des gaz est de l'oxygène et l'autre gaz un combustible, ledit chalumeau délivrant une flamme de veilleuse et une flamme principale de soudage

De façon plus générale, l'invention concerne aussi un chalumeau comprenant :
- un corps comportant une pluralité de conduites de gaz ;
- au moins deux valves montées dans ledit corps et aptes à prendre une position de repos dans laquelle le flux correspondant de gaz est interrompu dans au moins l'une desdites conduites de gaz et une position active dans laquelle le passage du flux de gaz est autorisé dans au moins l'une desdites conduites de gaz ;
- un organe de commande unique d'au moins lesdites deux valves monté mobile sur ledit corps coopérant avec au moins lesdites valves et apte à prendre une première position stable dans laquelle lesdites valves sont au repos et au moins une deuxième position stable dans laquelle au moins une desdites valves est en position active; et
- au moins un moyen de réglage de débit comportant un élément mobile de commande et commandable pour régler le débit d'au moins un desdits flux de gaz,
   caractérisé en ce que l'organe de commande des valves est mobile en translation selon la direction d'un axe longitudinal du corps, et comporte un système d'allumage dont l'activation est commandée par l'organe de commande.

De préférence, les moyens de réglage de débit sont au nombre de deux et associés à chacun des deux gaz respectivement constitués par le gaz comburant, tel l'oxygène, et le gaz combustible, tel l'acétylène. Chaque moyen de réglage comprend un organe mobile de commande constitué par un volant rotatif dont la position angulaire est représentative du débit de gaz au sein de la conduite de gaz considérée.

Grâce au chalumeau de l'invention, la mise en oeuvre des différentes phases d'alimentation du chalumeau, qu'il s'agisse d'un chalumeau de découpe, de chauffage ou de soudage sont réalisées par l'actionnement d'un unique organe de commande et que, de plus, cet organe de commande est pourvu préférentiellement d'un dispositif de verrouillage au moins en position d'arrêt évitant ainsi une alimentation accidentelle du chalumeau.

On comprend également que, grâce à la présence du ou des moyens de réglage de débit d'au moins un des gaz distincts des valves d'alimentation en gaz du chalumeau, on obtient une mémorisation et/ou une conservation des différents réglages même après l'extinction du chalumeau.

En outre, cette séparation entre les organes de commande par valve qui peuvent être du type par tout ou rien et les organes de réglage de débit permet de rendre beaucoup plus efficaces et précis les moyens de réglage de débit.

Dans le cadre de la présente invention, les termes "conduite de gaz" sont utilisés pour désigner toute canalisation, ligne, passage ou tout autre circuit de gaz aménagé dans le corps du chalumeau et permettant de véhiculer les différents flux de gaz dans ledit corps de chalumeau.

D'autres caractéristiques et avantages de l'invention apparaîtront mieux à la lecture de la description qui suit de plusieurs modes de réalisation de l'invention, donnés à titre d'exemples non limitatifs, en référence aux figures annexées parmi lesquelles :
- la figure 1 est une vue en coupe verticale du corps d'un chalumeau de découpe, encore appelé chalumeau "coupeur" ;
- la figure 2 est une vue de dessus du corps de chalumeau de la figure 1, l'organe de commande étant supprimé ;
- la figure 3 est une vue de gauche du corps de chalumeau de la figure 1 ;
- la figure 4 est une vue en coupe verticale d'un robinet de réglage de débit utilisable dans le chalumeau de la figure 1 ;
- la figure 5 est une vue schématique montrant les différentes positions de l'organe de commande du chalumeau de la figure 1 ;
- la figure 6 est une vue en coupe verticale d'un corps de chalumeau de chauffage ;
- la figure 7 est une vue partielle de dessus du chalumeau de la figure 6, les organes de réglage de commande étant supprimés ; et
La figure 8 est une vue partielle en coupe verticale d'un corps de chalumeau de soudage.

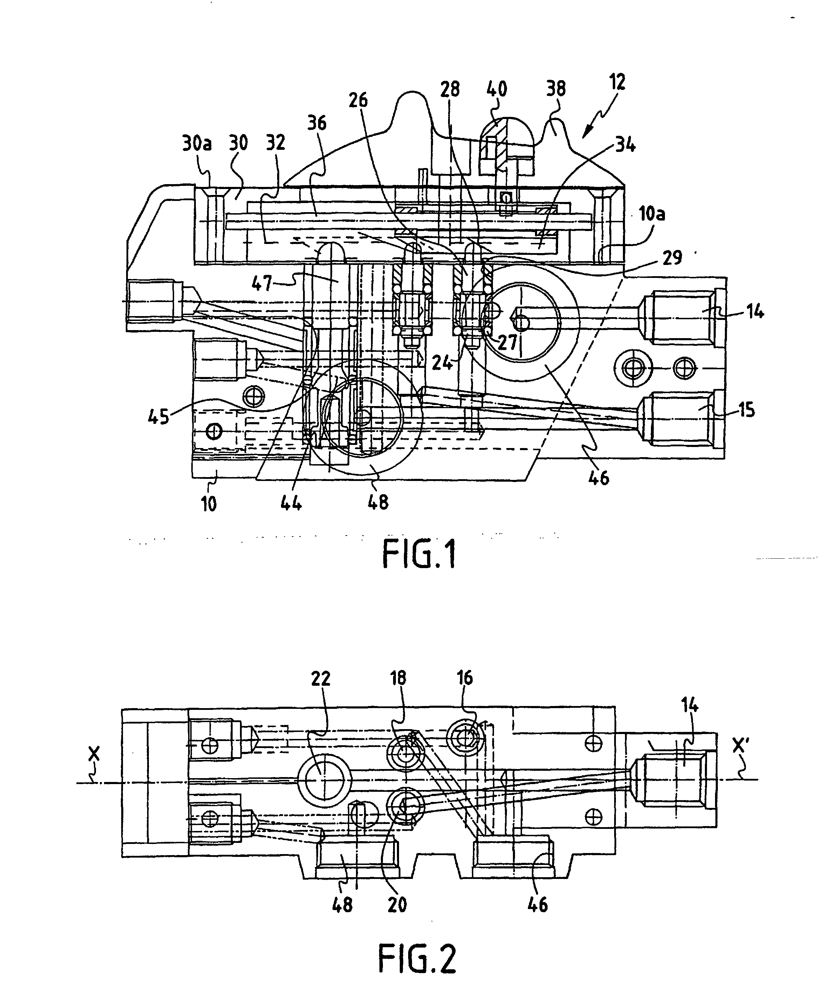

En se référant tout d'abord aux figures 1 à 3, on va décrire un mode de réalisation d'un chalumeau de découpe selon l'invention.

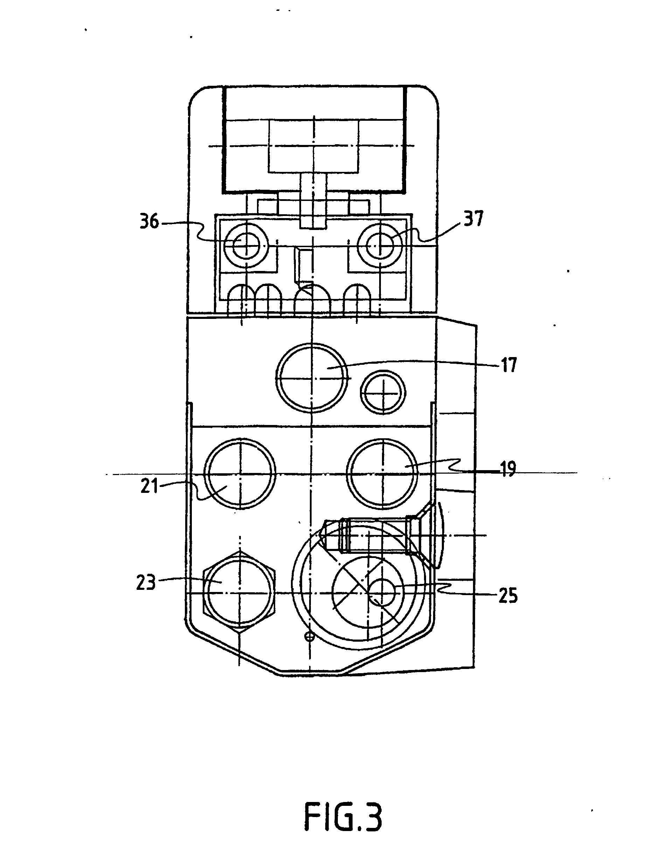

Sur ces figures, on a représenté le corps 10 du chalumeau sur lequel est monté à coulissement un organe unique de commande 12. Le corps du chalumeau comporte une arrivée de gaz combustible 14 et une arrivée d'oxygène 15 ou de tout autre gaz comburant. La commande d'alimentation des deux gaz pour alimenter la veilleuse, la flamme principale et le jet de découpe est obtenue à l'aide de quatre valves, qui sont mieux visibles sur la figure 2, montées sur des conduites de gaz percées dans le corps 10 et reliant les arrivées de gaz 14 et 15 aux sorties 17 d'oxygène de coupe, 19 d'oxygène de chauffe, 21 de combustible de chauffe et 23 de combustible pour la veilleuse (cf. figure 3). On trouve une première valve 16 de commande de l'alimentation en combustible de la veilleuse, une deuxième valve 18 de commande en combustible de la flamme principale, une troisième valve 20 de commande en oxygène de la flamme de chauffe et d'activation du système d'allumage 25 de la veilleuse du type piézo-électrique et une quatrième valve 22 de commande de l'oxygène pour créer le jet de découpe.

Dans le mode de réalisation considéré, les valves 18 et 20 sont disposées dans un même plan orthogonal à l'axe XX' du corps du chalumeau. Les valves 16, 18 et 20 sont du type par tout ou rien. Chacune de ces valves comporte un siège 27 et un obturateur mobile 24 monté mobile dans un alésage 29 réalisé dans le corps du chalumeau. L'obturateur 24 est prolongé par une tige de commande 26 comportant une tête de commande 28. Les têtes de commande 28 des valves 16 à 22 dans leur position de repos représentée sur les figures, font saillie hors de la face supérieure 10a du corps du chalumeau. Dans leur position de repos représentée sur la figure 1, les valves 16 à 20 sont en position fermée. La commande synchronisée des différentes valves 16 à 22 est assurée par l'intermédiaire de l'organe unique de la commande 12 qui est monté mobile en translation selon la direction de l'axe XX' du corps du chalumeau par l'intermédiaire d'une pièce de guidage 30 elle-même solidaire de la face supérieure 10a du corps 10 du chalumeau. La pièce de guidage 30 comporte un évidement 32 dans lequel font saillie les têtes 28 de différentes valves. Dans cet évidement 32, peut se déplacer en translation longitudinale une pièce formant came 34 qui est guidée en translation par des tiges de guidage 36 et 37 disposées parallèlement à l'axe XX'. La came 34 est solidaire d'un curseur 38 mobile en translation le long de la face supérieure 30a de la pièce de guidage 30, les déplacements longitudinaux du curseur 38 étant transmis à la came 34. Le curseur 38 est équipé d'un poussoir de verrouillage 40. Au repos, le poussoir 40 solidarise le curseur avec le corps du chalumeau 10. Il est nécessaire d'enfoncer le poussoir 40 pour désolidariser le curseur 38 et permettre son déplacement. La came 34 comporte quatre faces actives décalées en forme de rampe permettant d'agir sur les têtes de commande 28 des différentes valves 16 à 22 selon un synchronisme qui sera expliqué ultérieurement.

Il est à souligner que la valve 22 d'alimentation en oxygène de découpe est du type à réglage progressif. Pour cela, elle comporte un organe d'obturation 44 présentant le profil 45 voulu pour obtenir la courbe souhaitée de débit en fonction du déplacement de sa tige de commande 47.

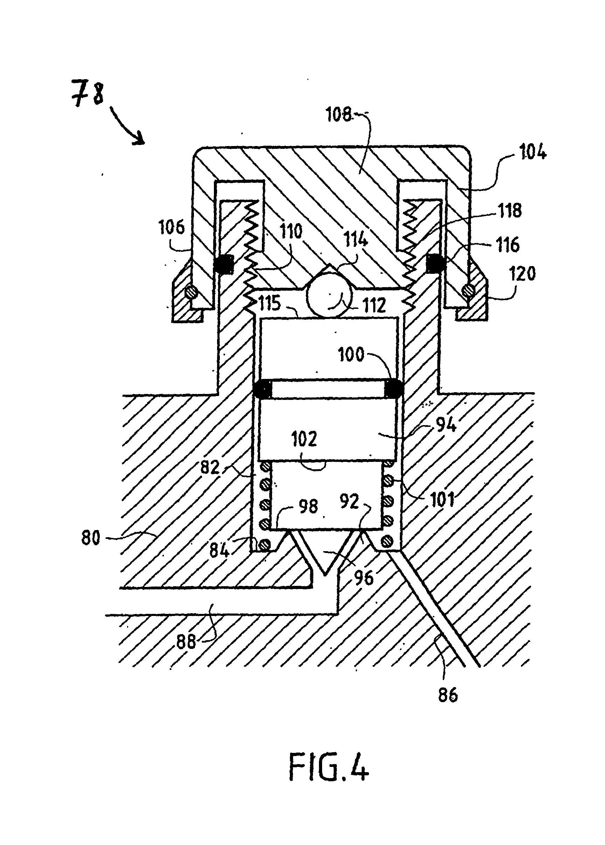

Le chalumeau est également équipé de deux robinets de commande de débit respectivement pour l'oxygène et pour le combustible. Sur les figures 1 3, on a fait apparaître les bossages taraudés de fixation 46 et 48 de ces robinets de réglage qui seront décrits ultérieurement en liaison avec la figure 4. Il suffit de retenir que chaque robinet comporte un volant de commande et que la plage de réglage correspond à un peu moins d'une rotation d'un tour, ainsi la position du volant indique directement le réglage. Ces robinets reçoivent une couronne graduée qui est positionnée après montage du pointeau sur le corps, ce qui permet un indexage précis et économique même avec des usinages classiques. Ces robinets peuvent être remplacés en cas d'usure ou de détérioration consécutive à un choc par exemple, avec la même procédure simple d'indexage.

Ces robinets ne servant qu'au réglage et non à l'ouverture et à la fermeture des gaz, sont beaucoup moins sollicités que les robinets des chalumeaux classiques. Toutefois, dans le souci de fiabilité et de durabilité de cet appareil, leur conception sépare les surfaces fonctionnelles devant assurer l'étanchéité de celles devant assurer le laminage du débit.

Ces robinets permettent de procéder à un réglage a priori des débits de gaz, sans que la flamme ne soit allumée. De préférence, le mode d'emploi de l'appareil donne à cet effet une indication de la position moyenne de chacun des robinets pour chaque type ou calibre de buse devant équiper le chalumeau. Avec ce réglage a priori, la flamme s'allume correctement; si l'utilisateur souhaite affiner ou personnaliser son réglage, il peut agir à nouveau sur les robinets.

Grâce à ces moyens de commande d'ouverture et fermeture de gaz séparés, l'extinction de la flamme se fait sans toucher aux robinets. Ainsi, le réglage affiné ou personnalisé n'est pas perdu. L'utilisateur qui est amené à changer fréquemment de buse ou à faire différents travaux exigeant différents réglages peut aussi établir son propre barème et l'appliquer en se référant aux index des volants. De tels robinets contribuent ainsi à la facilité et à la constance du travail tout en épargnant du temps et du gaz.

En se référant maintenant aux figures 1, 2 et 5, on va décrire l'utilisation du chalumeau de découpe selon l'invention. A l'arrêt, le curseur 38 des moyens de commande occupe une position extrême 1 représentée sur la figure 1. Dans cette position, le poussoir de verrouillage 40 est au repos et immobilise le curseur 38. Dans la position 1, la came 34 n'agit par ses faces actives sur aucune des têtes de commande des valves 16 à 22 et celles-ci sont donc toutes fermées. Le verrouillage à l'aide du poussoir 40 évite toute commande accidentelle du chalumeau.

Pour se servir du chalumeau, l'utilisateur enfonce le poussoir de verrouillage 40 et déplace progressivement le curseur et donc la came 34. Celle-ci entraîne successivement l'ouverture de la valve du circuit d'oxygène de chauffe, la valve du circuit de combustible de chauffe et la valve du circuit de combustible de veilleuse commandant également dans cette dernière position l'activation du système d'allumage constitué par exemple par un système piézo-électrique. On réalise ainsi successivement l'allumage de la veilleuse et l'allumage de la flamme principale.

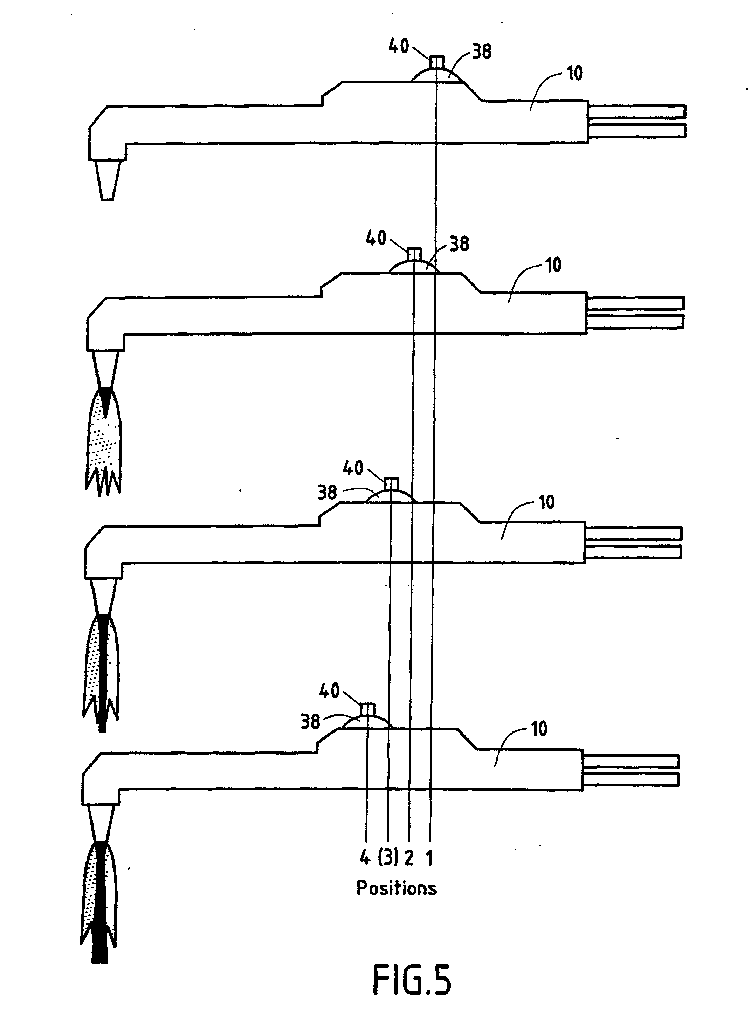

Lorsque le curseur arrive dans une position 2 définie par un point dur et qui est donc une position stable, la came occupe une position telle que les valves 18 et 20 demeurent ouvertes alors que la valve 16 est fermée entraînant l'extinction de la veilleuse. En outre, dans cette position, la came n'a pas encore commencé à commander l'ouverture de la valve 22 d'alimentation en oxygène de découpe. Si l'on continue à déplacer le curseur au-delà de sa position 2, c'est-à-dire vers la gauche dans le cas de la figure 1, la came 34 maintient l'ouverture des valves 18 et 20 et provoque l'ouverture progressive de la valve 22 correspondant à l'oxygène de découpe. On obtient ainsi un jet de coupe dont le débit est progressif résultant de l'ouverture proportionnelle de la valve 22. Lorsque le curseur 38 arrive à la deuxième extrémité de sa course correspondant à la position 4 de la figure 5, la valve d'oxygène de découpe 22 est totalement ouverte et le poussoir de verrouillage revient à sa position de repos immobilisant ainsi la came 34 dans la position de découpe.

Lorsqu'on veut interrompre l'opération de découpe alors que le curseur est dans sa position 4, on enfonce le poussoir 40 de verrouillage et le curseur revient à sa position 2 sous l'effet de moyens de rappel non représentés sur la figure. Ce déplacement provoque la fermeture de la valve 22 et donc l'arrêt du jet de découpe lorsque le curseur revient dans sa position 2. Dans cette position 2, qui est stable grâce à la présence du point dur, le chalumeau fournit seulement la flamme principale. Si l'on veut arrêter totalement le chalumeau, on pousse le curseur vers la droite, c'est-à-dire vers la position 1, ce qui provoque la fermeture des valves 18 et 20 d'oxygène de chauffe et de combustible. Lorsque le curseur a été ramené à sa position 1, la flamme de chauffe est donc interrompue et le curseur est verrouillé à nouveau par le poussoir de verrouillage.

En se référant maintenant à la figure 4, on va décrire un mode de réalisation préféré du robinet de réglage 78. Celui-ci comporte un corps 80 destiné à être fixé sur le bossage 46 ou 48 du corps de chalumeau. Le corps 80 définit une chambre 82 de forme générale cylindrique dans le fond 84 de laquelle débouche une conduite d'arrivée de gaz 86 et une sortie axiale de gaz 88. La conduite 88 est raccordée au fond par une portion conique 90 de profil prédéterminé. Le fond 84 de la chambre est muni d'une nervure annulaire 92 entourant la portion conique 90.

Dans la chambre cylindrique 82, est monté un pointeau mobile 94 dont l'extrémité inférieure définit une portion axiale de réglage 96, de forme sensiblement conique et une zone périphérique d'étanchéité 98 disposée en regard de la nervure 92. Le pointeau est équipé d'un joint d'étanchéité 100 et d'un ressort de rappel 101 monté entre le fond 84 de la chambre 82 et un épaulement 102 du pointeau qui tend à écarter le pointeau du fond 84 de la chambre.

La commande du pointeau 94 est réalisée par un volant rotatif 104 comportant une jupe cylindrique de manoeuvre 106 et un axe fileté 108 qui coopère avec un taraudage 110 ménagé à la partie supérieure de la chambre 84. Une bille 112 est interposée entre un évidemment conique 114 réalisé à l'extrémité de l'axe 108 et la face supérieure 115 du pointeau. Ce mode de liaison entre le volant 104 et le pointeau 94 permet d'éviter que le mouvement de rotation du volant ne soit transmis au pointeau.

Un joint d'étanchéité 116 est interposé entre la face interne de la jupe 106 et le prolongement cylindrique 118 du corps du robinet. Le joint 116 sert à freiner le volant 104 par rapport au corps du robinet pour empêcher une rotation non voulue du volant. Enfin, une bague avec index 120 est montée libre en rotation par rapport au corps du robinet. Après l'étalonnage initial du robinet, cette bague est rendue solidaire du corps du robinet.

Le fonctionnement du robinet est détaillé ci-après.

Lorsque le volant est amené dans sa position de fermeture, la zone d'étanchéité 90 du pointeau est appliquée sur la nervure annulaire 92, ce qui interrompt la communication entre l'entrée 86 et la sortie 88. En revanche, dans cette position du pointeau, il n'y a aucun contact entre la partie de réglage 96 du pointeau et la portion tronconique 90 du siège du pointeau.

En provoquant la rotation du volant 104, on provoque un déplacement correspondant de la portion de réglage 96 du pointeau par rapport à la portion tronconique 98, ce qui permet de régler le débit.

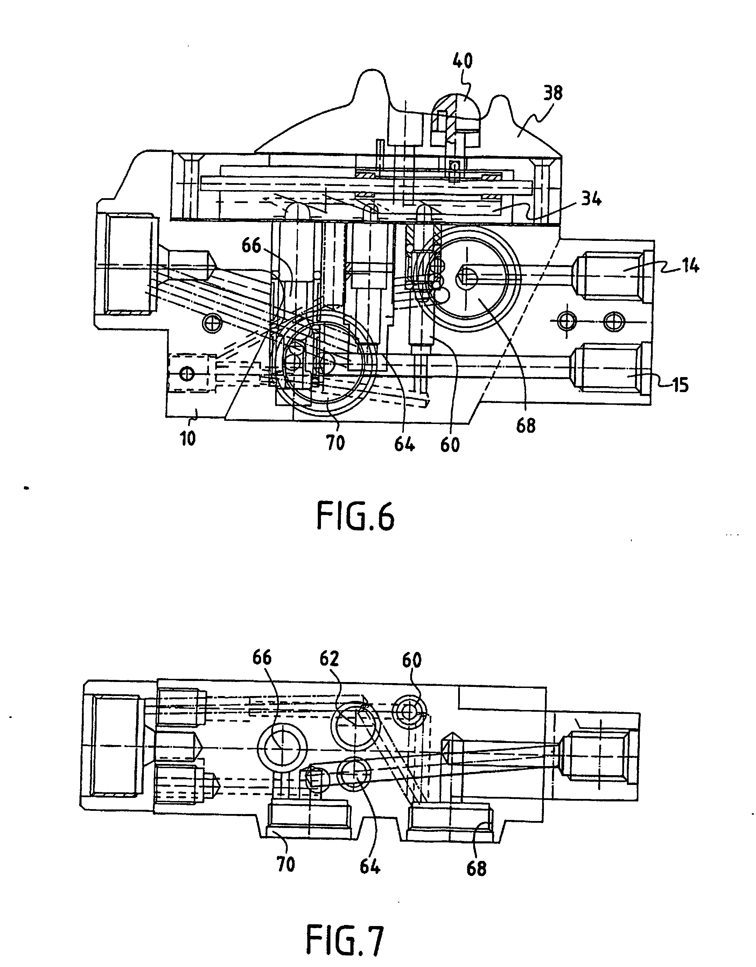

Les figures 6 et 7 illustrent un mode de réalisation d'un chalumeau de chauffage comportant un organe de commande conforme à l'invention.

Ce chalumeau se distingue de celui qui a été décrit en relation avec les figures 1 à 3 seulement par la fonction des valves et par la géométrie des canalisations réalisées dans le corps du chalumeau pour relier les entrées d'oxygène et de combustibles aux buses de sortie par l'intermédiaire des quatre valves et des deux robinets de réglage.

Selon ce mode de réalisation, la valve 60 sert à l'alimentation en combustible de la veilleuse; la valve 62 sert à l'alimentation en combustible de la flamme principale, la valve 64 sert à l'alimentation en oxygène de la commande du système d'allumage de la veilleuse, qui est par exemple du type piézo-électrique et la vanne 66 sert à l'alimentation en oxygène de la flamme principale.

Les quatre valves 60 à 66 produisent une commande par tout ou rien. Comme dans le cas du chalumeau des figures 1 à 3, le réglage du débit d'oxygène et de gaz combustible est réalisé à l'aide de deux robinets de réglage montés dans les bossages taraudés de fixation 68 et 70.

Le fonctionnement du chalumeau de chauffe des figures 6 et 7 est le suivant.

A l'arrêt, le curseur 38 occupe une position stable à la première extrémité de sa course et il est verrouillé par le poussoir 40. La came 34 n'agit sur aucune des tiges de valve et les quatre valves sont fermées. Pour utiliser le chalumeau de chauffe, on pousse le curseur 38 vers la gauche (figure 6) après avoir enfoncé le poussoir 40. Ce déplacement du curseur 38 et donc de la came 34 provoque successivement l'ouverture de la valve 66 du circuit d'oxygène de chauffe, de la valve du circuit de combustible de chauffe et la valve du circuit du combustible de veilleuse, ainsi que celle de la valve d'allumage. On obtient ainsi la flamme principale. Le curseur 38 est alors disposé à la deuxième extrémité de sa course qui constitue une position stable grâce à la présence d'un point dur.

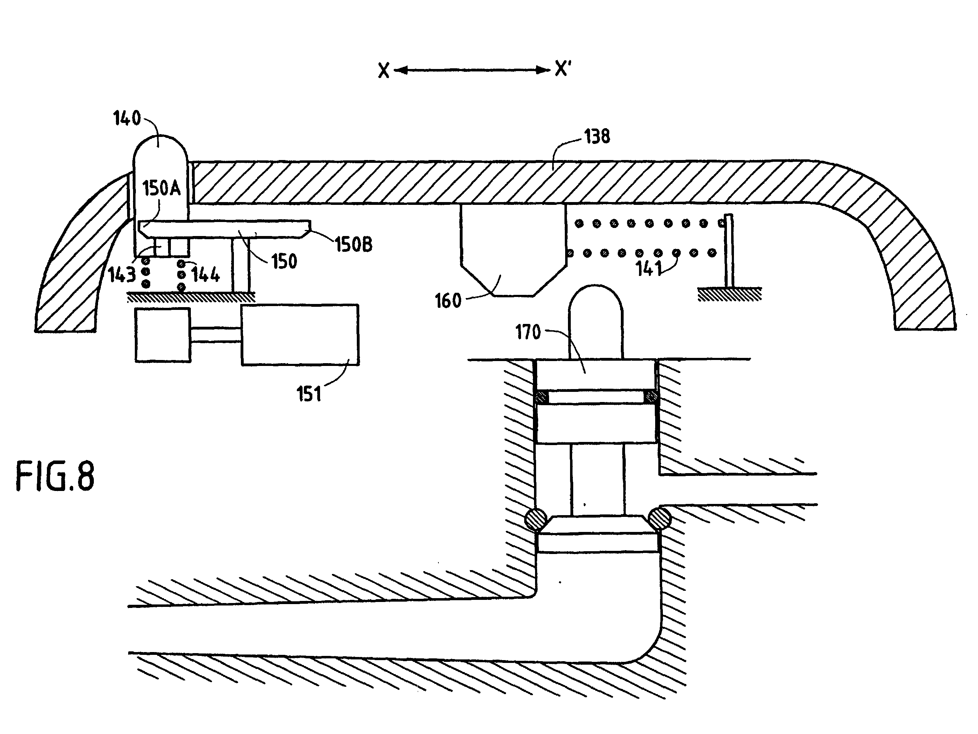

En se référant maintenant à la figure 8, on va décrire un chalumeau soudeur selon la présente invention.

Le curseur 138 est mobile en translation parallèlement à l'axe XX' du corps du chalumeau. Il est verrouillé en position repos et de travail par un poussoir 140 comportant une dent 143 venant en appui aux deux extrémités 150A et 150B d'une rampe 150 solidaire du corps du chalumeau. Un ressort de rappel 144 maintient le poussoir en position haute et donc la dent en appui sur la rampe en absence d'action volontaire sur le poussoir.

Des valves assurent respectivement l'alimentation en oxygène de la flamme principale, en combustible de flamme principale, en combustible de la veilleuse, seule la valve 170 étant représentée sur la figure. Les valves sont activées par trois cames solidaires du curseur 138, seule la came 160 étant représentée.

En position de repos, les valves sont fermées. Pour passer en position de travail, il faut appuyer sur le poussoir 140, ce qui a pour effet de dégager la dent 143 de la rampe 150 et d'autoriser ainsi, par appui du pouce par exemple sur le curseur, la translation du curseur 138 donc des cames 160 à 162, ces cames agissent pendant la translation sur les valves 170 à 172.

Lorsque le curseur et les pièces solidaires sont arrivés en position de travail, à l'extrémité de la rampe 150, la dent 143 vient en appui sur l'extrémité 150B de la rampe et bloque le curseur. Les deux premières valves sont maintenues activées. La valve correspondant au combustible de veilleuse n'est activée que transitoirement pendant la translation du curseur 138. Pendant cette activation transitoire, une certaine quantité de combustible est envoyée à la veilleuse et concomitamment, le générateur piézo-électrique 151 est activé et génère une étincelle qui allume la veilleuse. La veilleuse allume la flamme principale. Pour éteindre la flamme principale et revenir en position de repos, il suffit de presser le poussoir 140, ce qui a pour effet de libérer la dent 143 de la rampe. Le ressort 141 provoque le retour du curseur 138 en position de repos. La dent 143, sous l'effet du ressort 144, revient en appui sur l'extrémité 150A de la rampe dès que la pression est relâchée sur le poussoir 140.

Un chalumeau selon l'invention peut, selon la variante architecturale considérée, être utilisé pour mettre en oeuvre un procédé de coupage, soudage, de chauffage ou analogue d'une ou plusieurs pièces métalliques, notamment des pièces en aciers, et ce, en utilisant de l'oxygène ou un gaz contenant de l'oxygène en tant que gaz comburant et, d'autre part, de l'acétylène ou tout autre gaz combustible, notamment les hydrocarbures, tel le propane ou le gaz naturel par exemple.

## Revendications

1. Chalumeau, en particulier de type oxy-combustible comprenant :
- un corps (10) comportant une pluralité de conduites de gaz pour acheminer au moins deux flux de gaz entre une pluralité d'entrées (14, 15) et une pluralité de sorties (17, 19, 21, 23, 25) ;
- au moins deux valves (16, 18, 20, 22 ; 60, 62, 64, 66, 170) montées dans ledit corps et aptes à prendre une position de repos dans laquelle le flux correspondant de gaz est interrompu dans au moins l'une desdites conduites de gaz et une position active dans laquelle le passage du flux de gaz est autorisé dans au moins l'une desdites conduites de gaz;
- un organe de commande unique (12) d'au moins lesdites deux valves monté mobile sur ledit corps (10) et déplaçable selon une trajectoire pour coopérer avec au moins lesdites valves, ledit organe de commande (12) étant apte à prendre une première position stable dans laquelle lesdites deux valves sont au repos et au moins une deuxième position stable dans laquelle au moins une desdites valves est en position active ; et
- au moins un moyen de réglage (78) de débit commandable monté sur ledit corps pour régler le débit d'au moins un desdits flux de gaz, ledit moyen de réglage comportant un élément mobile de commande
**caractérisé en ce que** :
- l'organe de commande (12) desdites valves est mobile en translation selon la direction d'un axe longitudinal dudit corps (10), et
- il comporte un système d'allumage (25, 151), dont l'activation est commandée par l'organe de commande (12).

2. Chalumeau selon la revendication 1, **caractérisé en ce qu'**il comprend deux moyens de réglage de débit (78), chaque moyen de réglage étant associé à un gaz et/ou **en ce que** l'élément mobile de commande est un volant (104) rotatif, de préférence un volant (104) rotatif dont la position est représentative du débit de gaz réglé.

3. Chalumeau selon l'une des revendications 1 ou 2, **caractérisé en ce que** chaque moyen de réglage (78) comprend un robinet comportant un corps de robinet (80), un pointeau mobile (94) et un siège (90), et un volant (104) étant monté rotatif sur ledit corps de robinet pour provoquer le déplacement dudit pointeau (94).

4. Chalumeau selon l'une des revendications 1 à 3, **caractérisé en ce que** chaque valve comprend un siège (27) et un obturateur mobile (24) muni d'une tige de commande (26) présentant une extrémité de commande (28) et **en ce que** ledit organe de commande (12) comprend un curseur (38) extérieur au corps dudit chalumeau et une came (34) solidaire dudit curseur, ladite came étant apte à coopérer ou non avec l'extrémité de commande des tiges de commande desdites valves selon la position dudit curseur.

5. Chalumeau selon l'une des revendications 1 à 4, **caractérisé en ce que** ledit moyen de verrouillage comprend un poussoir (40, 140) monté mobile par rapport audit curseur (38) apte à prendre une position de repos dans laquelle ledit curseur (38) est solidaire du corps (10) du chalumeau et une position active dans laquelle ledit curseur (38) est libre par rapport audit corps (10).

6. Chalumeau selon l'une des revendications 1 à 5, **caractérisé en ce qu'**il comprend au moins trois valves, de préférence au moins quatre valves.

7. Chalumeau selon l'une des revendications 1 à 6, **caractérisé en ce qu'**il comprend
- une première valve (16) de commande du gaz combustible pour délivrer une flamme de veilleuse ;
- une deuxième (18) valve pour commander le gaz combustible de flamme- principale et une troisième (20) valve pour commander l'oxygène de flamme principale et le système d'allumage de la veilleuse; et
- une quatrième valve (22) de commande de l'oxygène pour le jet de coupe.

8. Chalumeau selon l'une des revendications 1 à 7, **caractérisé en ce que** lesdites première, deuxième et troisième valves (16, 18, 20) sont des valves par tout ou rien et **en ce que** ladite quatrième valve (22) est à réglage progressif.

9. Chalumeau selon l'une des revendications 1 à 8, **caractérisé en ce qu'**il comprend des moyens pour définir une deuxième position stable dudit organe de commande (12) dans laquelle lesdites première (16) et quatrième (22) valves sont en position de repos et les deuxième (18) et troisième (20) valves sont en position active, de préférence il comprend, en outre, des moyens pour définir une troisième position stable dans laquelle lesdites deuxième (18), troisième (20) et quatrième (22) valves sont en position active et la première valve est en position de repos.

10. Chalumeau selon l'une des revendications 1 à 9, **caractérisé en ce que** ladite troisième position stable du curseur (38) correspond à la deuxième extrémité de sa trajectoire et **en ce que** ledit moyen de verrouillage (40) prend sa position de repos lorsque ledit curseur (38) est dans sa première position stable à une première extrémité de sa trajectoire et lorsque ledit curseur est dans sa troisième position stable, correspondant à la deuxième extrémité de sa trajectoire.

11. Chalumeau selon l'une des revendications 1 à 6, **caractérisé en ce qu'**il comprend :
- une première valve (60) de commande du combustible pour la veilleuse ;
- une deuxième valve (62) de commande du combustible pour la flamme de chauffe ;
- une troisième valve (66) de commande d'un système d'allumage de la flamme de veilleuse ; et
- une quatrième valve (64) de commande de l'oxygène pour la flamme de chauffe,
de préférence lesdites valves (60, 62, 66, 64) sont à commande par tout ou rien.

12. Chalumeau selon la revendication 9, **caractérisé en ce qu'**il comprend des moyens pour définir ladite deuxième position stable de l'organe de commande (12) et **en ce que**, dans cette position, lesdites deuxième (62) et quatrième (64) valves sont en position active et lesdites première (60) et troisième (66) valves sont au repos.

13. Chalumeau selon l'une des revendications 1 à 6, **caractérisé en ce qu'**il comprend :
- une première valve d'alimentation en oxygène de la flamme principale ;
- une deuxième valve d'alimentation en combustible de la flamme principale ; et
- une troisième valve (170) d'alimentation en combustible de la veilleuse ;
de préférence lesdites trois valves sont à commande par tout ou rien.

14. Chalumeau selon la revendication 1,
**caractérisé en ce qu'**il comporte des moyens commandables (40, 140) de verrouillage de l'organe de commande pour solidariser, au repos, ledit organe de commande sur ledit corps, au moins dans ladite première position et actionnable manuellement pour désolidariser ledit organe de commande dudit corps

15. Chalumeau selon l'une des revendications 1 à 14, **caractérisé en ce qu'**il comporte un système d'allumage (25, 151) de type piézo-électrique.

16. Procédé de coupage, soudage ou de chauffage d'une ou plusieurs pièces métalliques, notamment des pièces en aciers, dans lequel :
- on utilise de l'oxygène ou un gaz contenant de l'oxygène en tant que gaz comburant,
- on utilise de l'acétylène ou au moins un hydrocarbure en tant que gaz combustible, et
- on utilise un chalumeau selon l'une des revendications 1 à 15.

## Patentansprüche

1. Brenner, insbesondere Sauerstoff-Brennstoff-Brenner, der Folgendes umfasst:
- einen Körper (10), der mehrere Gasleitungen zur Beförderung mindestens zweier Gasströme zwischen mehreren Einlässen (14, 15) und mehreren Auslässen (17, 19, 21, 23, 25) aufweist;
- mindestes zwei Ventile (16, 18, 20, 22; 60,62, 64, 66, 170), die im Körper angebracht sind und eine Ruhestellung, in der der entsprechende Gasstrom in mindestens einer der Gasleitungen unterbrochen ist, sowie eine aktive Stellung, in der der Durchgang des Gasstroms in mindestens eine der Gasleitungen gestattet ist; einnehmen können;
- ein einziges Betätigungsglied (12) zur Betätigung von mindestens den beiden Ventilen, das beweglich am Körper (10) angebracht und entlang einer Bahn beweglich ist, um zumindest mit den Ventilen zusammenzuwirken, wobei das Betätigungsglied (12) eine erste stabile Position, in der sich die beiden Ventile in Ruhestellung befinden, und eine zweite stabile Position, in der sich mindestens eines der Ventile in aktiver Stellung befindet, einnehmen kann; und
- mindestens ein Mittel (78) zur Einstellung des steuerbaren Durchflusses, das an dem Körper angebracht ist, um den Durchfluss mindestens eines der Gasströme einzustellen, wobei das Einstellmittel ein bewegliches Betätigungselement aufweist,
**dadurch gekennzeichnet, dass**
- das Betätigungselement (12) der Ventile in Richtung einer Längsachse des Körpers (10) translatorisch beweglich ist, und
- er ein Zündungssystem (25, 151) aufweist, dessen Aktivierung durch das Betätigungsglied (12) bewirkt wird.

2. Brenner nach Anspruch 1, **dadurch gekennzeichnet, dass** er zwei Mittel (78) zur Einstellung des Durchflusses enthält, wobei jedes Einstellmittel einem Gas zugeordnet ist, und/oder dass das bewegliche Steuerelement ein drehbares Handrad (104), vorzugsweise ein drehbares Handrad (104), dessen Position für den eingestellten Gasdurchfluss repräsentativ ist, ist.

3. Brenner nach Anspruch 1 oder 2, **dadurch gekennzeichnet, dass** jedes Einstellmittel (78) einen Hahn, der einen Hahnkörper (80), eine bewegliche Nadel (94) und einen Sitz (90) aufweist, sowie ein Handrad (104) umfasst, das drehbar am Hahnkörper angebracht ist, um die Bewegung der Nadel (94) zu bewirken.

4. Brenner nach einem der Ansprüche 1 bis 3, **dadurch gekennzeichnet, dass** jedes Ventil einen Sitz (27) und einen beweglichen Verschluss (24) aufweist, der mit einer ein Betätigungsende (28) aufweisenden Betätigungsstange (26) versehen ist, und dass das Betätigungsglied (12) einen sich außerhalb des Brennerkörpers befindenden Schieber (38) und eine fest mit dem Schieber verbundene Kurve (34) aufweist, welche gemäß der Position des Schiebers gegebenenfalls mit dem Betätigungsende der Betätigungsstangen der Ventile zusammenwirken kann.

5. Brenner nach einem der Ansprüche 1 bis 4, **dadurch gekennzeichnet, dass** das Verriegelungsmittel einen Drücker (40, 140) umfasst, der bezüglich des Schiebers (38) beweglich angebracht ist und eine Ruhestellung, in der der Schieber (38) fest mit dem Körper (10) des Brenners verbunden ist, und eine aktive Stellung, in der der Schieber (38) bezüglich des Körpers (10) frei ist, einnehmen kann.

6. Brenner nach einem der Ansprüche 1 bis 5, **dadurch gekennzeichnet, dass** er mindestens drei Ventile, vorzugsweise mindestens vier Ventile, aufweist.

7. Brenner nach einem der Ansprüche 1 bis 6, **dadurch gekennzeichnet, dass** er Folgendes umfasst:
- ein erstes Ventil (16) zur Steuerung des Brenngases zur Lieferung einer Wachflamme;
- ein zweites (18) Ventil zur Steuerung des Hauptflammen-Brenngases und ein drittes (20) Ventil zur Steuerung des Hauptflammen-Sauerstoffs und des Zündsystems der Wachflamme; und
- ein viertes Ventil (22) zur Steuerung des Sauerstoffs für den Schneidstrahl.

8. Brenner nach einem der Ansprüche 1 bis 7, **dadurch gekennzeichnet, dass** das erste, zweite und dritte Ventil (16, 18, 20) Ein-Aus-Ventile sind und dass das vierte Ventil (22) ein Ventil mit stetiger Regelung ist.

9. Brenner nach einem der Ansprüche 1 bis 8, **dadurch gekennzeichnet, dass** er Mittel zur Definition einer zweiten stabilen Position des Betätigungsglieds (12) aufweist, in der sich das erste (16) und das vierte (22) Ventil in Ruhestellung und das zweite (18) und das dritte (20) Ventil in aktiver Stellung befinden, und er vorzugsweise des Weiteren Mittel zur Definition einer dritten stabilen Position umfasst, in der sich das zweite (18), dritte (20) und vierte (22) Ventil in aktiver Stellung und das erste Ventil in Ruhestellung befinden.

10. Brenner nach einem der Ansprüche 1 bis 9, **dadurch gekennzeichnet, dass** die dritte stabile Position des Schiebers (28) dem zweiten Ende seiner Bahn entspricht und dass das Verriegelungsmittel (40) seine Ruhestellung einnimmt, wenn sich der Schieber (38) in seiner ersten stabilen Position an einem ersten Ende seiner Bahn befindet und wenn sich der Schieber in seiner dritten stabilen Position, die dem zweiten Ende seiner Bahn entspricht, befindet.

11. Brenner nach einem der Ansprüche 1 bis 6, **dadurch gekennzeichnet, dass** er Folgendes umfasst:
- ein erstes Ventil (60) zur Steuerung des Brennstoffes für die Wachflamme;
- ein zweites Ventil (62) zur Steuerung des Brennstoffes für die Heizflamme;
- ein drittes Ventil (66) zur Steuerung eines Zündsystems für die Wachflamme; und
- ein viertes Ventil (64) zur Steuerung des Sauerstoffs für die Heizflamme,
wobei die Ventile (60, 62, 66, 64) vorzugsweise eine Ein-Aus-Betätigung besitzen.

12. Brenner nach Anspruch 9, **dadurch gekennzeichnet, dass** er Mittel zur Definition der zweiten stabilen Position des Betätigungsglieds (12) umfasst und dass sich im dieser Position das zweite (62) und vierte (64) Ventil in aktiver Stellung und das erste (60) und das dritte (66) Ventil in Ruhestellung befinden.

13. Brenner nach einem der Ansprüche 1 bis 6, **dadurch gekennzeichnet, dass** er Folgendes umfasst:
- ein erstes Ventil zur Versorgung der Hauptflamme mit Sauerstoff;
- ein zweites Ventil zur Versorgung der Hauptflamme mit Brennstoff; und
- ein drittes Ventil (170) zur Versorgung der Wachflamme mit Brennstoff;
wobei die drei Ventile vorzugsweise eine Ein-Aus-Betätigung besitzen.

14. Brenner nach Anspruch 1, **dadurch gekennzeichnet, dass** er steuerbare Mittel (40, 140) zur Verriegelung des Betätigungsglieds aufweist, um zumindest in der ersten Position in Ruhestellung das Betätigungsglied am Körper zu befestigten,
wobei die Mittel manuell betätigbar sind, um das Betätigungsglied vom Körper zu trennen.

15. Brenner nach einem der Ansprüche 1 bis 14, **dadurch gekennzeichnet, dass** er ein Zündsystem (25, 151) piezo-elektrischer Art aufweist.

16. Verfahren zum Schneiden, Schweißen und Erwärmen eines oder mehrerer Metallteile, insbesondere Teile aus Stahl, bei dem man:
- Sauerstoff oder ein Sauerstoff als Oxidationsgas enthaltendes Gas verwendet,
- Acetylen oder mindestens einen Kohlenwasserstoff als Brenngas verwendet, und
- einen Brenner nach einem der Ansprüche 1 bis 15 verwendet.

## Claims

1. Torch, particularly of the oxy-fuel type, comprising:
- a body (10) comprising a number of gas pipes for conveying at least two streams of gas between a number of inlets (14, 15) and a number of outlets (17, 19, 21, 23, 25);
- at least two valves (16, 18, 20, 22; 60, 62, 64, 66, 170) mounted in the said body and capable of adopting a rest position in which the corresponding stream of gas is interrupted in at least one of the said gas pipes and an active position in which the passage of the stream of gas is allowed through at least one of the said gas pipes;
- a single control (12) for at least the said two valves, mounted so that it can move on the said body (10) and able to be moved in a path so that it collaborates with at least the said valves, the said control (12) being capable of adopting a first stable position in which the said two valves are at rest and at least one second stable position in which at least one of the said valves is in an active position; and
- at least one controllable delivery adjusting means (78) mounted on the said body for adjusting the delivery of at least one of the said streams of gas, the said adjusting means comprising a mobile control element, **characterized in that**:
- the control (12) for the said valves can be moved in translation in the direction of a longitudinal axis of the said body (10), and
- it comprises an ignition system (25, 151), activation of which is controlled by the control (12).

2. Torch according to Claim 1, **characterized in that** it comprises two delivery adjusting means (78), each adjusting means being associated with one gas, and/or **in that** the mobile control element is a rotary handwheel (104), preferably a rotary handwheel (104) the position of which is indicative of the gas delivery adjusted.

3. Torch according to either of Claims 1 and 2, **characterized in that** each adjusting means (78) comprises a tap comprising a tap body (80), a moving needle (94) and a seat (90), and a handwheel (104) being mounted so that it can rotate on the said tap body so as to cause the said needle (94) to move.

4. Torch according to one of Claims 1 to 3, **characterized in that** each valve comprises a seat (27) and a mobile shutter (24) equipped with a control stem (26) which has a control end (28), and **in that** the said control (12) comprises a slider (38) external to the body of the said torch and a cam (34) secured to the said slider, the said cam being capable of collaborating or of not collaborating with the control end of the control stems of the said valves according to the position of the said slider.

5. Torch according to one of Claims 1 to 4, **characterized in that** the said locking means comprises a push-button (40, 140) mounted so that it can move with respect to the said slider (38) and capable of adopting a rest position in which the said slider (38) is secured to the body (10) of the torch and an active position in which the said slider (38) is free with respect to the said body (10).

6. Torch according to one of Claims 1 to 5, **characterized in that** it comprises at least three valves, preferably at least four valves.

7. Torch according to one of Claims 1 to 6, **characterized in that** it comprises:
- a first valve (16) for controlling the fuel gas to deliver a pilot flame;
- a second (18) valve for controlling the main flame fuel gas and a third (20) valve for controlling the main flame oxygen and the system for igniting the pilot; and
- a fourth valve (22) for controlling the oxygen for the cutting jet.

8. Torch according to one of Claims 1 to 7, **characterized in that** the said first, second and third valves (16, 18, 20) are on/off valves and **in that** the said fourth valve (22) can be adjusted progressively.

9. Torch according to one of Claims 1 to 8, **characterized in that** it comprises means for defining a second stable position of the said control (12) in which position the said first (16) and fourth (22) valves are in the rest position and the second (18) and third (20) valves are in the active position; it preferably also comprises means for defining a third stable position in which the said second (18), third (20) and fourth (22) valves are in the active position and the first valve is in the rest position.

10. Torch according to one of Claims 1 to 9, **characterized in that** the said third stable position of the slider (38) corresponds to the second end of its path and **in that** the said locking means (40) adopts its rest position when the said slider (38) is in its first stable position at a first end of its path and when the said slider is in its third stable position corresponding to the second end of its path.

11. Torch according to one of Claims 1 to 6, **characterized in that** it comprises:
- a first valve (60) for controlling the fuel for the pilot;
- a second valve (62) for controlling the fuel for the heating flame;
- a third valve (66) for controlling a system for igniting the pilot flame; and
- a fourth valve (64) for controlling the oxygen for the heating flame;
and the said valves (60, 62, 66, 64) are preferably of the on/off type.

12. Torch according to Claim 9, **characterized in that** it comprises means for defining the said second stable position of the control (12) and **in that**, in this position, the said second (62) and fourth (64) valves are in the active position and the said first (60) and third (66) valves are at rest.

13. Torch according to one of Claims 1 to 6, **characterized in that** it comprises:
- a first valve for supplying the main flame with oxygen;
- a second valve for supplying the main flame with fuel; and
- a third valve (170) for supplying the pilot with fuel; and the said three valves are preferably of the on/off type.

14. Torch according to Claim 1, **characterized in that** it comprises controllable means (40, 140) of locking the control so as to secure, at rest, the said control to the said body, at least in the said first position, and which can be actuated by hand to free the said control from the said body.

15. Torch according to one of Claims 1 to 14, **characterized in that** it comprises an ignition system (25, 151) of the piezo-electric type.

16. Method for cutting, welding or heating one or more pieces of metal, particularly pieces of steel, in which:
- use is made of oxygen or of a gas containing oxygen by way of oxidizing gas,
- use is made of acetylene or of at least one hydrocarbon by way of fuel gas, and
- use is made of a torch according to one of Claims 1 to 15.
